(19) **Europäisches Patentamt / European Patent Office / Office européen des brevets**

(11) **EP 4 418 142 A1**

(12) **EUROPEAN PATENT APPLICATION**

(43) Date of publication:
**21.08.2024 Bulletin 2024/34**

(51) International Patent Classification (IPC):
***G06F 16/35*** (2019.01)

(21) Application number: **24158243.6**

(22) Date of filing: **16.02.2024**

(52) Cooperative Patent Classification (CPC):
**G06F 16/355; G06N 3/042; G06N 3/045; G06N 3/09; G06N 5/01; G06N 20/00;** G06N 5/022

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 EP 23157416**

(71) Applicant: **KPMG LLP**
**London E14 5GL (GB)**

(72) Inventor: **GUO, Tao**
**London, E14 5GL (GB)**

(74) Representative: **Keltie LLP**
**No. 1 London Bridge**
**London SE1 9BA (GB)**

(54) **DOCUMENT CLUSTERING USING NATURAL LANGUAGE PROCESSING**

(57) A Cluster System for automatically clustering together a plurality of data files based on semantics of textual content of each of the plurality of data files is described. The Cluster System comprises a Cluster Processor for processing the plurality of data files created externally and independently of the Cluster System. The Cluster Processor comprises: an Event Data Ingester for receiving each of the plurality of data files; a Vector Creator configured to apply each of a plurality of different stored vector templates to a data file received by the Event Data Ingester to determine a plurality of numerical vector representations of the textual content of the data file, each vector template defining a specific subset of characteristics of the textual content of the data file and each vector representation being specific to each vector template and indicating the degree to which the specific subset of characteristics of textual content of the vector template is present in the data file; a Vector Aggregator configured to combine the plurality of numerical vector representations of the textual content of the data file into an aggregated summary vector representing the textual content of the data file, the Vector Aggregator being configured to use a set of vector weights to determine the contribution of each of the different vector representations to the aggregated summary vector; and a Cluster Manager configured to use the aggregated summary vector to cluster together the data file with other data files each having their own aggregated summary vector.

Figure 2

EP 4 418 142 A1

**Description**

TECHNICAL FIELD

The present invention relates to document clustering using Natural Language Processing (NLP) and more particularly, though not exclusively relates to clustering of multilingual text documents using efficient accurate processes which are scalable and can operate in a distributed computing environment. The present invention also concerns improved methods of vectorisation of text documents into a numerical space for improved NLP of that document.

BACKGROUND

NLP is a known technique that is used in a wide range of applications. However, there are currently limitations of this technique relating to language-agnostic, accurate document representation, and scalability of certain processes.

Clustering textual documents into groups dependent on their content is a useful application of NLP. Technical benefits of such clustered documents include faster searching of the documents where search algorithms can find a given document far more quickly than otherwise. Also a document search implementation can be distributed between multiple machines, with each machine handling a specific cluster, thereby enabling the searching to be carried out using a distributed processing network which is ideal for Cloud applications and also reduces the maximum processing power required at any one machine. These benefits increase significantly when the number of documents increases substantially.

Clustering documents using NLP typically involves two separate steps: the first relating to how documents are represented in the numerical space, namely converting the textual documents into numerical representations, and the second relating to the clustering of the numericallyrepresented documents themselves.

In existing work relating to the first step, documents are often represented either by sparse representation, for example Term Frequency-Inverse Document Frequency (TF-IDF) scores or vectors, or dense representation, which is based on word, sentence, or document embeddings. Entities in documents are often represented using TF-IDF subvectors and/or by fine-tuning the document embeddings using an entity aware Bidirectional Encoder Representations from Transformers (BERT) model.

There are several drawbacks when using sparse document representation. For example, the keywords, that are extracted using the TF-IDF score, are not able to fully capture the information of a document, the TF-IDF vectors do not capture the semantics of a document, and there is no consideration of different entities. Additionally, even when dense document representation is used, an inefficient, two-step approach is needed to represent documents when the input documents are multilingual.

In terms of the second step of clustering, existing methods for clustering documents are divided into two categories based on processing mode: batch processing and streaming processing. Batch processing handles a set of documents that have been stored, while streaming processing compares a new document against existing document clusters. Scaling these processing methods is difficult due to them being extremely time-consuming (for batch processing), or resource hungry because all documents must be stored, maintained, and compared against each new document (for streaming processing).

NLP can be used in a wide range of applications, among which clustering news articles by event is a particularly illustrative, non-limiting example. Providing a more accurate, efficient, method for representing news documents, in any language, would give a much more accurate representation of world news events. This is important for downstream insight analysis, for example, event significance estimation, time series event tracking, or news deduplication. In addition, a more efficient, scalable method for clustering documents relating to the same event into groups would be extremely advantageous for more efficient searching and processing as mentioned above, due to the huge number of news articles that are generated throughout the world every day. News article searching and database maintenance is further complicated as any given event may be reported by the media over an extended period of time (e.g. with periodic updates over time). News events are often centred around specific entities, e.g. dates, locations, persons, organisations, etc, to answer the fundamental questions about "when," "where," "who," and "what." Different news sources might provide unique insights, facts, or analyses about the same event. These characteristics often mean that generic document clustering techniques cannot be directly applied to news event clustering.

News event clustering enables readers to more easily obtain a more comprehensive view of an event from diverse aspects reported by different sources; It can help estimate the significance of an event; it can also help track how an event evolves over time, e.g. shifts in public opinion, changes in the focus of the reporting, and/or to track the emergence of new angles or aspects of a news event.

At present, the newsLens pipeline described by Laban and Hearst in 2017 ('newsLens: building and visualizing long-ranging news stories') is the basis for clustering news documents using batch processing. They describe a method to aggregate and organise a multi-source dataset of news articles into a collection of major stories. Documents are first represented using keywords that are extracted using the TF-IDF score, but as outlined above, keywords cannot fully capture the information of a document. The newsLens pipeline then uses a local topic graph and a standard community detection algorithm to cluster the articles within each batch, or sliding window (i.e. the number of days of news articles that are handled at once). Each article is a node on the graph, and articles are assigned an edge between them if the number of overlapping keywords is above a certain threshold. Clusters in overlapping time windows can be linked, merged, or split, and clusters in nonoverlapping time windows can be merged using cosine similarity of the vectors containing the counts of the keywords.

Staykovski, Barrón-Cedeño, Martino, and Nakov followed the newsLens approach in their method described in the 2019 article 'Dense vs Sparse Representations for News Stream Clustering'. The method combines sparse representations of documents (TF-IDF vectors) with more dense representations (300-dimensional doc2vectors). The clustering technique described is similar to the newsLens approach, except cosine similarity is used to determine the edge between documents.

A significant disadvantage associated with the newsLens clustering method is that it is an extremely time-consuming method, due to the pairwise similarity checks that are needed to compare documents and create clusters. Additionally, multilingual news articles are not supported.

In their 2020 article 'Batch Clustering for Multilingual News Streaming' Linger and Hajaiej extend the newsLens pipeline to support multilingual news articles. Here a system is described that again uses batch processing, where monolingual local topics are grouped and then linked across time and languages. Monolingual document representation in this method consists of nine TF-IDF sub-vectors corresponding to entities, lemmas, and tokens, and then a new fine-tuned multilingual embedding using the Sentence-BERT triplet network structure is used to represent documents in the multilingual space. This results in a two-step clustering approach, where clusters are first created over time separately in each language included in the batch. English is then used as a pivot language, and non-English clusters are linked with English clusters using the Hungarian algorithm (Kuhn, The Hungarian method for the assignment problem, 1955). Although this method does support multilingual documents, using this complex algorithm to link clusters across languages is an extremely time-consuming process, resulting in an inefficient method that is not scalable for real world applications.

Streaming processing can also be used to cluster documents, for example to cluster news events on the same subject and to link articles over time. In their 2018 article 'Multilingual Clustering of Streaming News', Miranda, Znotins, Cohen, and Barzdins describe a method for clustering an incoming stream of multilingual documents into monolingual and crosslingual clusters. Monolingual representation of documents consists of entity representation by nine TF-IDF sub-vectors, while crosslingual representation consists of crosslingual embedding vectors that are similar to the monolingual vectors. A two-step approach is needed to cluster the documents, where the model first groups documents into monolingual clusters for each language by computing the similarity along each sub-vector, and then the monolingual clusters are associated with the closest crosslingual cluster.

A similar technique is described by Saravanakumar, Ballesteros, Chandrasekaran, and McKeown in their 2021 article 'Event-Driven News Stream Clustering using Entity-Aware Contextual Embeddings'. They describe a method for online news stream clustering using a variant of the nonparametric K-means algorithm. Their model uses a combination of sparse and dense document representations consisting of nine TF-IDF sub-vectors, one document embedding fine-tuned using a BERT model, and one temporal representation. Similarity between documents is computed by aggregating the document-cluster similarity along the set of representations, and then the cluster membership is determined by a neural classifier.

The approaches based on streaming processing are, however, severely limited in terms of scalability. Scaling these methods to work with a large number of documents (hundreds of thousands to millions) is extremely challenging as all the clusters must be maintained once created, and the similarity between a new document and each existing cluster must be checked.

As outlined above, it is apparent that current NLP clustering methods, such as those used to cluster news articles, have significant disadvantages relating to document representation and the clustering process itself. Although the above example relates specifically to the clustering of news articles, it should be appreciated that other applications are possible, and would be subject to similar disadvantages.

The sparse and dense document representations used in existing work do not fully capture all the information in a document, and thus the representations may not be accurate. Additionally, when multilingual documents are included, the documents must be represented in their own independent language before they are linked to a crosslingual cluster, leading to an inefficient, 2-step approach.

For clustering, current techniques that rely on batch processing are highly time consuming due to the pairwise similarity check that compares documents, and clustering techniques based on streaming processing are not scalable for use in a real world environment.

An objective of the current invention is therefore to address at least some of the limitations outlined above. In particular, though not exclusively, it is desired to create more efficient, scalable, document representation and clustering methods, using NLP.

SUMMARY OF THE INVENTION

According to one aspect of the present invention there is provided a Cluster System for automatically clustering together a plurality of data files based on semantics of textual content of each of the plurality of data files, the Cluster System comprising a Cluster Processor for processing the plurality of data files created externally and independently of the Cluster System, the Cluster Processor comprising: an Event Data Ingester for receiving each of the plurality of data files; a Vector Creator configured to apply each of a plurality of different stored vector templates to a data file received by the Event Data Ingester to determine a plurality of numerical vector representations of the textual content of the data file, each vector template defining a specific subset of characteristics of the textual content of the data file and each vector representation being specific to each vector template and indicating the degree to which the specific subset of characteristics of textual content of the vector template is present in the data file; a Vector Aggregator configured to combine the plurality of numerical vector representations of the textual content of the data file into an aggregated summary vector representing the textual content of the data file, the Vector Aggregator being configured to use a set of vector weights to determine the contribution of each of the different vector representations to the aggregated summary vector; and a Cluster Manager configured to use the aggregated summary vector to cluster together the data file with other data files each having their own aggregated summary vector.

The Cluster System is configured further to receive search query data (e.g. from a user making a search). The Vector Creator is configured to apply each of the plurality of different stored vector templates to the search query data and determine a plurality of numerical vector representations of the search query data. The Vector Aggregator is configured to combine the plurality of numerical vector representations of the search query data into an aggregated summary vector representing the search query data. The Cluster Manager is further configured to determine that the aggregated summary vector of the search query data is within threshold limits of a cluster representation value of a first cluster of a set of existing clusters, and provide (e.g. to the user) one or more of the data files in the first cluster in response to the search query.

Some of the embodiments described here provide an NLP method that combines language-agnostic document representation, that can fully capture the information in a document, with a more efficient, scalable clustering technique. This is valuable in many applications, and particularly in the non-limiting example of clustering news articles according to event, to allow for downstream insight analysis.

The current embodiments leverage an advanced NLP technique that combines more accurate document representation with a more efficient, scalable clustering method, therefore addressing some of the current limitations in this area.

The advanced NLP technique of one of the present embodiments may also lead to a more efficient storage structure, where old documents are removed when no longer relevant.

The Cluster Manager may be configured to determine whether the aggregated summary vector of the data file matches a cluster representation value of any one of a set of existing clusters of the other data files and to create a new cluster representing the data file if the aggregated summary vector does not match the cluster representation value of any of the existing clusters and to add the new cluster to the set of existing clusters.

The Cluster Manager is, in one embodiment, is configured to determine the cluster representation value of each existing cluster as a centroid value of the aggregated summary vectors making up a corresponding existing cluster.

The Cluster Manager may be configured to determine that the aggregated summary vector of the data file matches the cluster representation value of one of the set of existing clusters of the other data files, if the aggregated summary vector is within threshold limits of the cluster representation value of the one of the set of existing clusters of the other data files.

The Cluster Manager may be configured to generate the cluster representation value of each of the clusters in the existing set of clusters.

The Cluster System preferably further comprising a Batch Processor for processing the plurality of data files in a batch, the Batch Processor being configured by a plurality of variable parameters to control the rate of ingestion of data files for processing.

The Batch Processor may comprise a parameter setting engine configured to enable setting of a time period window as one of the plurality of variable parameters and a batch update period as another one of the plurality of variable parameters, and the Batch Processor may be configured to receive data files made available during the time period window and to change the window in accordance with the batch update period.

The Cluster Processor is configured, in an embodiment, to generate an aggregated summary vector for each new data file in the batch and to create a batch cluster of at least one of the new data files from these aggregated summary vectors, and the Batch Processor may further comprise a Batch Creation/Management Engine which compares cluster representation value of the batch cluster with the cluster representation values of the existing set of clusters. The Batch Creation/Management Engine may be configured to add the batch cluster to the existing set of clusters as a new cluster if the cluster representation value of the batch cluster does not match the cluster representation value of any of the existing clusters.

The Batch Creation/Management Engine is configured, in an embodiment, to merge the batch cluster to a corresponding existing cluster, if the cluster representation value of the batch cluster matches the cluster representation value of the corresponding existing cluster.

The Batch Creation/Management Engine may be configured to remove data files from the existing clusters which no longer fall within the current time period window.

In an embodiment, the Batch Processor further comprises a Tree Engine for constructing a search tree for searching the existing clusters, the search tree being composed of cluster representation values of the existing set of clusters, the Tree Engine being operable conduct a proximity search of the existing clusters for a value equivalent to the cluster representation value of a batch cluster.

Preferably, the Tree Engine is configured to construct a Ball Tree or a KD Tree, as these are fast proximity search constructs.

The Batch Processor is preferably configured to update the time period window in accordance with the batch update period and create a new set of batch clusters for processing.

The Vector Creator is configured, in an embodiment, to apply each of a plurality of different stored vector templates in parallel to the data file received by the Event Data Ingester. This is possible as the vector templates operate independently of each other and as such the processing time required by the Vector Creator can be minimised.

In some embodiments, the Vector Creator is configured to use a vector template which defines a portion of a document structure in which the subset of characteristics of the textual content of the data file are to be found. This enables the general structure of the document to be used to give more weight to data provided in these parts than others, as for example a summary section of the document may contain more important information than other parts of the document for understanding its meaning.

The Vector Creator may be configured to use a vector template which defines an entity-specific subset or a geography-specific subset of characteristics of the textual content of the data file. These are examples of the types of subsets of characteristics that can be used.

Preferably, the Vector Creator uses a Multilingual Sentence Encoder, trained on a plurality of different languages. This supports the ability of the present embodiments to be language agnostic regarding data files received.

The Vector Creator can be configured to detect text elements which match the specific subset of characteristics of the vector template, to link these text elements to vector embeddings in a knowledge base and to determine an average value of all linked vector embeddings as the numerical vector representation of the data file.

The Cluster Processor may further comprise an AI Processor configured to generate the set of vector weights used to combine different amounts of the vector representations into the aggregated summary vector, the AI Processor being configured to be trained on a multitude of data sets.

In an exemplary embodiment, the AI Processor uses a Siamese Neural Network with triplet loss which has been trained on a multilingual dataset.

According to another aspect of the present invention there is provided a computerimplemented method of automatically clustering together a plurality of data files based on semantics of textual content of each of the plurality of data files, the method comprising processing the plurality of data files created externally and independently of the Cluster System, the processing step comprising: receiving each of the plurality of data files; applying each of a plurality of different stored vector templates to a received data file to determine a plurality of numerical vector representations of the textual content of the data file, each vector template defining a specific subset of characteristics of the textual content of the data file and each vector representation being specific to each vector template and indicating the degree to which the specific subset of characteristics of textual content of the vector template is present in the data file; combining the plurality of numerical vector representations of the textual content of the data file into an aggregated summary vector representing the textual content of the data file, the combining step using a set of vector weights to determine the contribution of each of the different vector representations to the aggregated summary vector; and using the aggregated summary vector to cluster together the data file with other data files each having their own aggregated summary vector. The processing step further comprises receiving search query data, applying each of the plurality of different stored vector templates to the search query data to determine a plurality of numerical vector representations of the search query data, combining the plurality of numerical vector representations of the search query data into an aggregated summary vector representing the search query data, determining that the aggregated summary vector of the search query data is within threshold limits of a cluster representation value of a first cluster of a set of existing clusters, and providing one or more of the data files in the first cluster in response to the search query data.

BRIEF DESCRIPTION OF THE DRAWINGS

The present invention will now be described, by way of example only, with reference to the accompanying drawings, in which:

**Figure 1** is a schematic block diagram showing an exemplary system for implementing an improved multilingual clustering method according to an embodiment the present invention;

**Figure 2** is a schematic block diagram showing in greater detail the composition of the Cluster Processor and Data Store of the clustering system shown in **Figure 1**;

**Figure 3** is a schematic block diagram showing in greater detail the composition of the Batch Processor and Data Store of the clustering system shown in **Figure 1;**

**Figure 4** is a flow diagram showing the operation of the Batch Processor of **Figure 3** implementing a batch process;

**Figure 5** is a flow diagram showing a method of creating vectors and clustering a new document by the system of **Figure 1;**

**Figure 6** is a schematic diagram showing an example of the steps of using different representations of single document to create an aggregated vector representation of that document in accordance with **Figure 5;**

**Figure 7** is a schematic block diagram showing examples of the steps of creation of different types of representations representing a text document in accordance with an embodiment of the present invention;

**Figure 8** is a schematic block diagram showing the AI processor of the Cluster Processor of **Figure 3** is trained to create an aggregated vector; and

**Figure 9** is a schematic block diagram showing an example of how the document clustering of the system of **Figure 1** can be used in an example of batch processing news articles;

**Figure 10** is a schematic block diagram showing the clustering system of **Figure 1** embedded in a database management system;

**Figure 11** is a flow diagram showing a method of searching that can be used with the database management system of **Figure 10.**

DETAILED DESCRIPTION

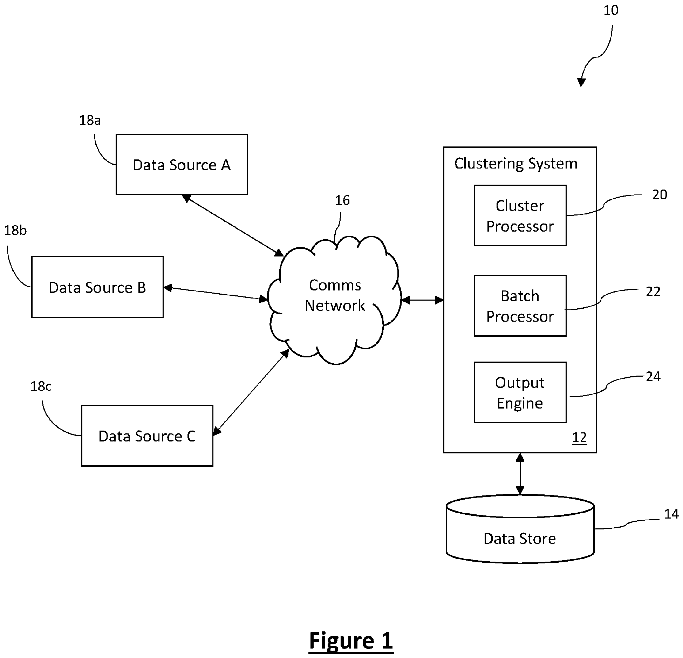

**Figure 1** shows the overview of an exemplary system 10 for an improved multilingual clustering method according to an embodiment of this disclosure. The system 10 includes a Clustering System 12, a data store 14, and data sources 18a 18b 18c (three are shown in **Figure 1,** though any number can be included) which communicate with the Clustering System 12 via a communications network 16. The Clustering System comprises a Cluster Processor 20, a Batch Processor 22, and an Output Engine 24 which all operate together to carry out the functionality of the Clustering System 12.

Textual documents can be pushed to the Clustering System 12 via the communications network 16, or the Clustering System 12 retrieves (pulls) data files, in the form of textual documents in this embodiment, from the data sources 18 via the communications network 16, for example, by using a web crawler. The types of documents could be for example, news documents. The documents are processed by the Cluster Processor 20 and the Batch Processor 22, and sent via the Output Engine 24 to the datastore 14. The datastore 14 stores the processed data that has been converted into the numerical space and clustered according to a given parameter, in this embodiment the given parameter is the event to which that document relates, though in other embodiments this can be another parameter, such as topic or search engine query.

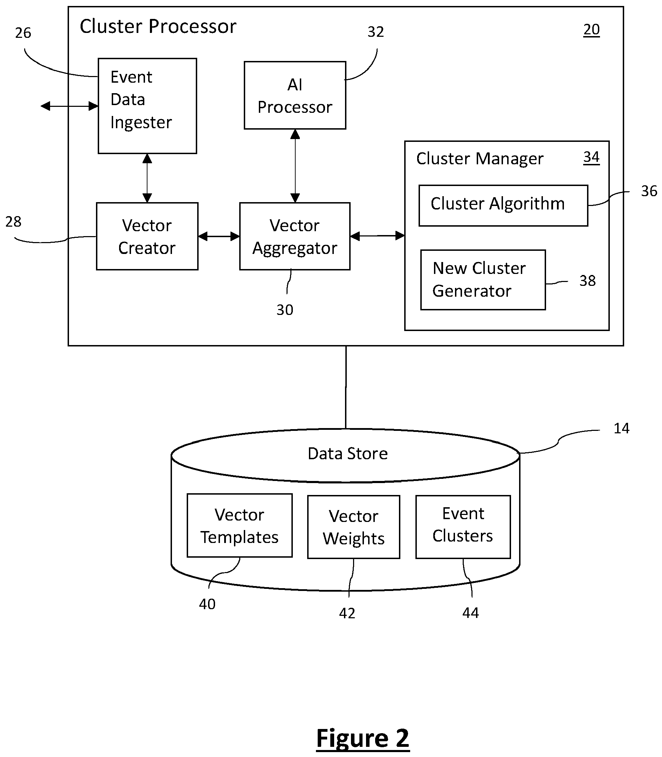

The Cluster Processor 20 within the Clustering System 12, and the datastore 14 to which the Cluster Processor is connected, are shown in greater detail in **Figure 2.** The datastore 14 stores vector templates 40, vector weights 42, and existing event clusters 44 (each of which is described in greater detail later).

The Cluster Processor 20 comprises several components which are shown in Figure 2 and are described below. The Cluster Processor 20 includes an Event Data Ingester 26 which is operatively coupled to a Vector Creator 28. The output of the Vector Creator is provided to a Vector Aggregator 30 which in turn provides its output to a Cluster Manager 34. An AI Processor 32 is provided as part of the Cluster Processor 20 and is coupled to the Vector Aggregator 30 to enable accurate vector aggregation. In use, the Event Data Ingester 26 receives documents from the data sources 18, and the Vector Creator 28 then uses several different types of representation to transform the text data from the input document into numerical vectors. Each numerical vector provides a specific numerical representation of particular characteristics of that document (data file) and is based on a semantic understanding of what that data file relates to. The characteristics may relate to content provided in specific predetermined parts of the document, and/or to specific types of content, for example. The vector templates 40 generate appropriate scoring related to the content being searched for, with a higher score if the content matches the relevant template characteristics. Examples of representations of a particular characteristic include Title and Lead Paragraph Representation, Geographical Location Representation and Entity Representation, but any other multilingual representation of a characteristic of the content of the document can be used. One input document, in any language, is thus characterised using multiple representative vectors and these vectors are typically language agnostic. Thus, the system is able to represent any document in any language using a mathematical representation. The document can then be clustered by the system regardless of the initial language of the document. The vector templates 40 for the chosen types of representation are stored in the datastore 14.

A Vector Aggregator 30 then combines the individual vectors produced by the Vector Creator 28 into one aggregated vector using output from the AI Processor 32. The AI Processor 32, having previously been trained on a multitude of data sets (described in detail later), generates a set of optimal vector weights 42 used to combine different amounts of the individual numerical vectors into the aggregated vector. The aggregated vector fully captures all the information of the input document, representing the characteristics of the input document, and so is a highly accurate numerical representation of the document. The vector weights 42 provided by the AI Processor 32 for this process are stored in the datastore 14.

The Cluster Manager 34 of the Cluster Processor 20 comprises a Cluster Algorithm 36 and a New Cluster Generator 38. The Cluster Manager 34 communicates with the Vector Aggregator 30, and so the aggregated vector representing the event data of the data file can be sent to the Cluster Manager 34 for the act of clustering the received data file with existing data files. The Cluster Algorithm 36 determines if the new event data matches any of the existing event clusters 44 that are currently stored in the data store 14. If so, the new data is added to an existing stored cluster 44, or otherwise, the New Cluster Generator 38 generates a new cluster containing the new event data. The new cluster is then stored in the datastore 14.

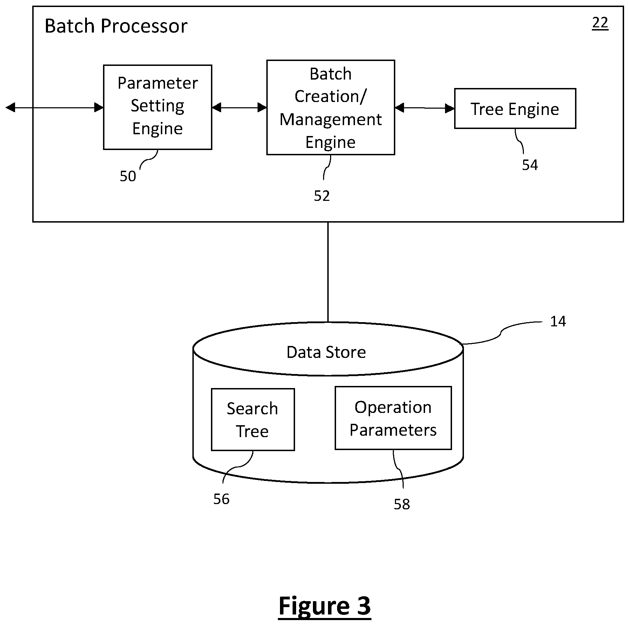

The Clustering System 12 also comprises a Batch Processor 22 that operates alongside the Cluster Processor 20 but, more specifically, handles batches of data files. The Batch Processor is shown in greater detail in **Figure 3,** and comprises a Parameter Setting Engine 50, a Batch Creation/Management engine 52, and a Tree Engine 54. The Batch Processor 22 is also connected to the data store 14. The Parameter Setting Engine is used to set variable operation parameters 58 which are then stored in the datastore 14. The operation parameters include an event sliding window, which defines a data file ingestion period, and a batch update period, which defines how often the window is updated. The Parameter Setting Engine 50 communicates with the Batch Creation/Management Engine 52, which in turn communicates with the Tree Engine 54. The Tree Engine is used to construct a search tree 56, which is also stored in the datastore 14, and used to conduct a proximity search, such as a Nearest Neighbour search, of the existing clusters 44 for the aggregated summary vector of each data file in the batch. In this regard, some of the functionality described above in relation to the Cluster Manager 34 is used by the Batch Processor 22, for example searching for a cluster 44 to which a new data file can be associated. However, this process is enhanced by the provision of the Tree Engine 54 which enables the search of the clusters to be carried out rapidly, even when scaled to a very large number of clusters, when processing a batch of data files. The Batch Creation/Management Engine 52 then determines, based on the result from the search, if the new event data (in new data files) should be merged with existing clusters 44, or if new clusters should be created. If a new cluster is to be generated, then the New Cluster Generator 38 of the Cluster Manager 34 creates a new cluster. This functionality has been described above in relation to the New Cluster Generator 38 of the Cluster Manager 34.

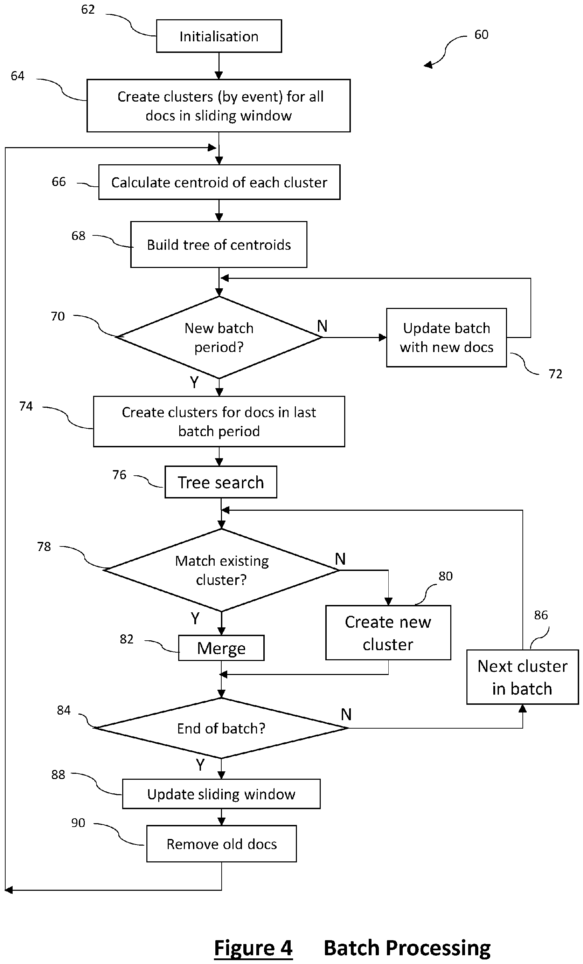

A flowchart of the batch processing method 60 (also referred to as cluster method) is illustrated in **Figure 4.** The method commences at initialisation Step 62, where the operation parameters 58 such as the event sliding window and the batch update period are set. The event sliding window is the period within which links between documents (data files) will be examined, for example 30 days. The batch update period is the period after which the cluster algorithm 36 is called to process the new documents within this period. For example, the batch update period could be 1 day. The batch update period can also be arbitrarily small (a few minutes or seconds) to support streaming.

Clusters are created, at Step 64, for all documents in the sliding window, where the documents are clustered according to event. It should be noted that at this stage, the documents have already been converted into the numerical space by the Cluster Processor 20 and so each already has an aggregated summary vector. These aggregated summary vectors each provide a value and similar values (within predefined thresholds) can be grouped together for a particular cluster 44 by the Cluster Manager 34. The centroid of each cluster 44 is calculated at Step 66, as the average value of all of the aggregated summary vectors which have been clustered together and each of these centroids, which provides a single value representation of the associated cluster (also known as cluster representation value), are then used to build a search tree 56, at Step 68. The search tree 56 can be structure suitable for conducting a proximity search, for example a Ball Tree or a KD Tree, and is used as a fast-indexing structure for an efficient proximity search such as a nearest neighbours search. At Step 70, the system determines if it is a new batch update period (from the initialisation parameters). If not, the batch is updated at Step 72, with new documents, and the determining and updating at Steps 70 and 72, are repeated until the system determines it is a new batch update period. When the system determines it is a new batch update period (for example, after 1 day), the Cluster Algorithm 36 is called, and clusters are created at Step 74, for all the documents in the last batch period. The system then, uses at Step 76, the centroid of a batch cluster to search the tree and determine, at Step 78, if the new batch cluster matches any of the existing stored clusters formed at Step 64. This matching is positive if the values being compared are within predetermined threshold limits of each other. If no matching cluster exists, a new cluster is created at Step 80. If a matching cluster is found via the nearest neighbours search, the clusters are merged at Step 82. The Clustering System 12 then determines, at Step 84, if all the batch clusters have been processed, and it is the end of the batch. If not, the Clustering System 12 moves at Step 86, on to the next cluster in the batch and the determining, creating, merging, determining and moving of Steps 78 to 86 are repeated until all the batch clusters have been processed, and the Clustering System 12 determines it is the end of the batch (Step 84). It is to be appreciated that in another embodiment this process of determining, creating, merging, determining and moving of Steps 78 to 86, could be carried out in parallel for each batch cluster. Once the batch is complete, the Clustering System 12 updates at Step 88, the event sliding window, where the event sliding window moves ahead of the batch update period. Old documents that were generated but are now outside the new sliding window, are removed at Step 90, and the method 60 is repeated starting from the calculating at Step 66 to the removing at Step 90 . This method 60 is therefore able to cluster documents in a continuous stream, whilst old documents are removed when they are deemed no longer relevant. The ability to remove old documents is useful as it results in a more efficient storage structure, which is valuable when there are high numbers of documents to be processed each day.

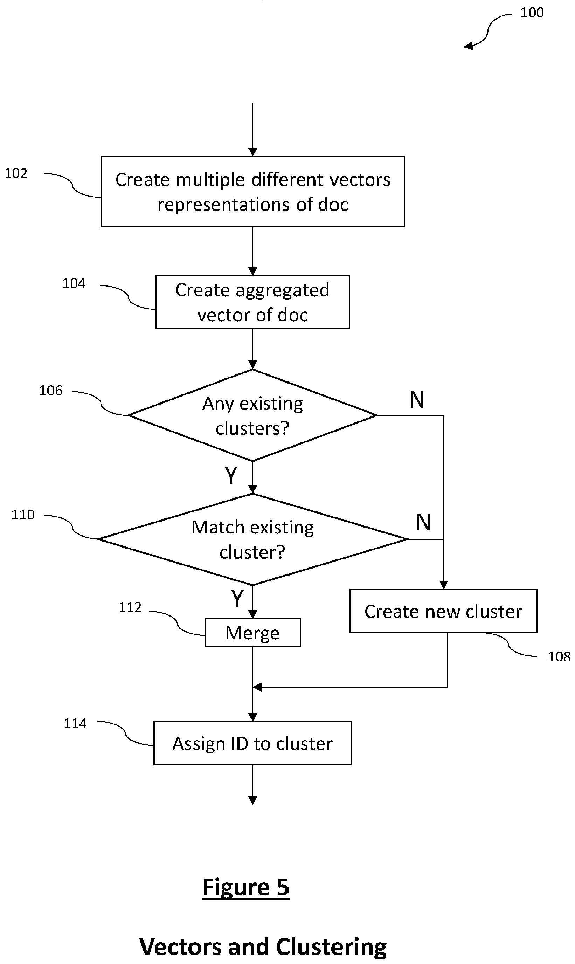

Prior to entering the Batch Processor 22 and undergoing the batch processing method 60, input text documents (data files) must first be converted into the numerical space by the Cluster Processor 20. **Figure 5** shows a flowchart illustrating the method 100 by which vectors and clusters are created in the Cluster Processor 20. The method 100 commences with multiple different vector representations of the input document being created, at Step 102, using the vector templates 40. The multiple representations are then combined, at Step 104, into a single aggregated vector, which can fully capture all the information in the document.

It is then determined, at Step 106, if there are any existing clusters stored in the datastore 14. If there are not, a new cluster is created, at Step 108, and an ID is assigned at Step 114, to the new cluster. If existing clusters are found to be stored in the datastore 14, the system then determines at Step 110, if the new document matches any of the existing stored clusters (for example relating to the same event). If there is no match, a new cluster is created at Step 108, and an ID is assigned at Step 114, to the new cluster. If it is determined at Step 110, that there is a match to an existing stored cluster, then these clusters are merged at Step 112. An ID is then assigned at Step 114, to the merged cluster. In this way, the input documents (data files) are transformed into a vector that can fully and accurately represent the document, and the documents can then be clustered into groups.

In some embodiments the Cluster System 10 of the present invention can be used to prevent duplication of stored documents. In some instances, identical documents may be received by the Cluster System 10, and it is not desirable to store both documents in clusters in the datastore 14. As described above, a data file is received by the cluster processor 20, represented numerically using an aggregated summary vector, and then clustered. It is then determined, by the cluster processor, if the aggregated summary vector of the received data file matches any of the existing clusters (each cluster containing multiple data files, each data file represented by its own aggregated summary vector). In embodiments where the Cluster System 10 is used to prevent duplication, once the matching cluster is determined, the Cluster Processor 20 determines a similarity score between the received data file and the data files within the matching cluster. The skilled person will be familiar with similarity scores (e.g. metrics or measures) that can be used to determine a degree of similarity between two vectors, for example Cosine Similarity

If the similarity score is over a threshold similarity, (the threshold similarity may be set according to the requirements of the particular system, but may be set, for example at 95% or 99%), then this can be used to identify duplicates or potential duplicates. Identifying duplicates can be useful for many reasons. The duplicated content can be flagged (and thus be omitted from searches), the duplicated content can be used as back-up in the event that a file fails or becomes unavailable, or the duplicated data file(s) can be omitted from the database entirely. In this way, duplication of data files in the clusters can be prevented, which is advantageous for optimising storage efficiency.

Returning to converting the input documents into an aggregated vector, it is important to first convert text into the numerical space for the text document to be compatible with machine learning models, and an embedding method, that is vectorisation, is a popular approach. In at least some of the present embodiments, a method is provided by which each document is represented using multiple multilingual embeddings to capture different characteristics of the document, and the different embeddings are then combined to create one aggregated vector. This creates a representation that is highly accurate.

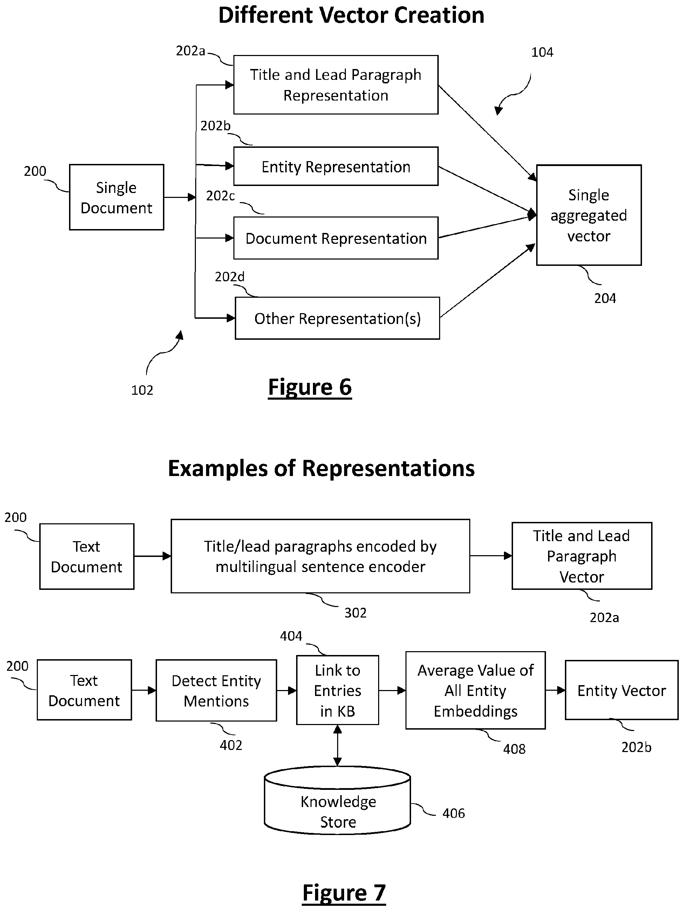

The process of creating the aggregated vector from the text document 200 (Steps 102 and 104 of Figure 5) is shown schematically in more detail in **Figure 6.** The text document 200 is processed to create (at Step 102 of Figure 5) multiple different vector representations 202a-d of the document. It is to be appreciated that the term 'vector representation' is referred to as a vector or a representation in other parts of this description, but describes the same element. These various different multilingual representations 202a-d each represent the text document 200 in the numerical space from a different point of view. For example, a title and lead paragraph representation 202a looks specifically at the title of the document and the first paragraph to extract information as these areas (portions the document) may have a greater weight than other areas of the document 200. An entity representation 202b extracts data relating only to entities mentioned in the document 200. A document representation 202c is created by embedding a document using a universal document encoder that has been trained on contrastive learning and multi-label classification tasks. Although these types of representations 202a-c are provided as examples, any type of representation 202d can be used. Other types of representations for example, include a summarisation embedding representation 202d, where a text summarisation technique is used to synthesise large bodies of texts so the most important part is first, i.e. the abstract, and then an embedding is applied to the abstract, and keywords representation, where keywords are extracted from the document using known NLP techniques and then vectorised. It should be noted that each of the vector representations used to represent a document can be generated in parallel, making this clustering method extremely computationally efficient. The individual representations are then combined (at Step 104) into a single aggregated vector 204.

Title and lead paragraph vectors 202a and entity vectors 202b, which were provided as examples of representation types in **Figure 6,** are important types of representations when being used in a news article application embodiment. Title and lead paragraph vectors 202a are valuable as these parts of a document often provide the most important information in the document. The process by which the title and lead paragraph vector 202a is created is illustrated in **Figure 7.** To create the title and lead paragraph vector 202a, the title and lead paragraphs of the text document 200 are encoded by a Multilingual Sentence Encoder 302. The Multilingual Sentence Encoder is trained on multiple languages, and so texts in different languages can be projected into a single embedding space.

Entity vectors 202b contain information on entities, which include a person, organisation, place, or product, among others. These are key constituents of an event, and so it is important that this information is captured. A schematic flowchart illustrating the process for creating entity vectors is also shown in **Figure 7.** To create the entity vector 202b for the text document 200, the system 10 first detects at Step 402, all entity mentions. Then, the detected entities are linked at Step 404, to corresponding entries in a knowledge store (knowledge base KB) 406. The knowledge store 406 is contained in the datastore 14 of the system 10. The knowledge store 406 entries can be either in the same language as the detected mentions or in a different language, as all entries are pre-embedded into a single embedding space using multilingual entity embedding techniques, such as that described by Tsai and Roth in 2016. It is to be appreciated that embeddings are dense numerical representations of real-world objects and relationships, expressed as a vector. The semantic similarity between categories are defined by the vector space, such that similar vectors represent similar categories. Once an entity mention is linked to an entry in the knowledge store 406, the entity mention will be represented using the embedding of that entry. In this way, the mentions of different variations in the same language (for example JPM, J. P. Morgan, or JPMorgan Chase) or in different languages (for example 摩根大通 in Chinese) can be linked together as being the same entity.

Once the embeddings of all the entities in a document are found, the average value of all the entity embeddings is calculated at Step 408, and this average is used as the entity representation 202b of the text document 200. If an entity is mentioned multiple times in a document, each mention will be counted in the calculation to indicate the importance, or centrality, of that specific entity to the entire document text. The averaging technique used here is known and widely used in NLP.

Each representation 202a-d (title and lead paragraph, entity etc.) used to represent the document is embedded into its own embedding space. As described briefly above, in this embodiment, the multiple multilingual representations are projected into the same embedding space, and combined into a single aggregated vector 204, so that the document 200 is as accurately represented as possible. This combined vector 204 is referred to as the single meta document embedding. The AI Processor 32 provides the Vector Aggregator 30 with the learned parameters (i.e. vector weights 42), to combine the different types of representations, and create the meta embedding of the document 200.

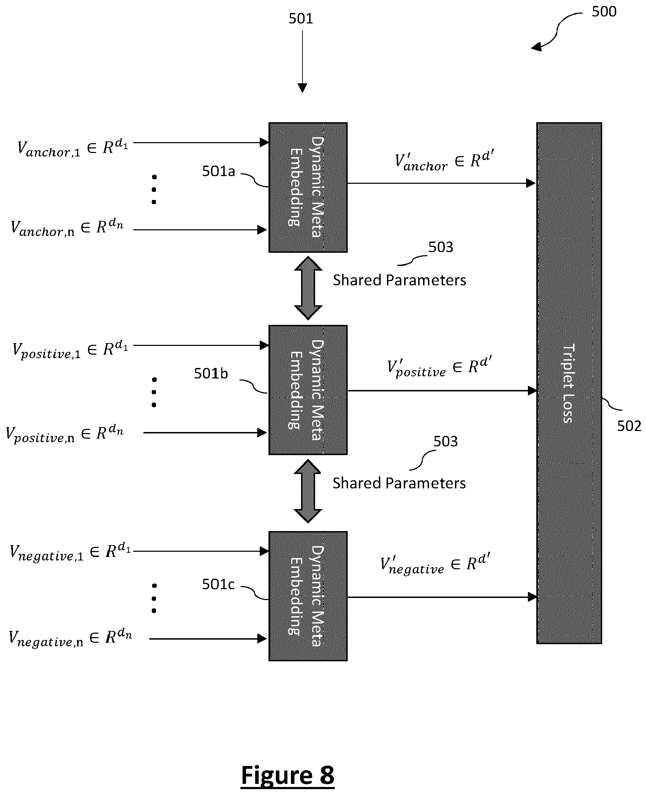

To determine the parameters (vector weights 42), a Siamese Neural Network 500 with triplet loss can be used. The Siamese Neural Network may have triplet loss and dynamic meta embedding, which has been trained on a multilingual dataset, to find an optimised set of vector weights. A diagram of such a neural network 500 is shown in **Figure 8.** To train this neural network 500, a labelled multilingual dataset is required. This dataset contains many documents, that are grouped in 'triplets' according to their label. Each triplet contains a reference document, known as an anchor document, a positive document, which is a document that matches the anchor, and a negative document, which does not match the anchor. This data set contains both training triplets and validation triplets. For example, a triplet may contain as the anchor a news event A (English), as the positive document news event A (Chinese), and as the negative document news event B (English).

The Siamese Neural Network 500 contains three identical subnetworks 501 known as dynamic meta embedding subnetworks that all contain the same parameters, and where parameter updating is mirrored across all the subnetworks.

A first subnetwork 501a corresponds to the 'anchor' document, a second subnetwork 501b corresponds to a document that is a 'positive' match to the anchor, and the third subnetwork 501c corresponds to a document that is a 'negative' match to the anchor. Inputs to the dynamic meta embedding subnetworks 501 are the multiple vector representations for each document, while the output is the dynamic meta embedding for each document. These meta embeddings are then input to the triplet loss structure 502, which then outputs the shared parameters 503, 42. These learned parameters are then used subsequently in the Clustering System 12 by the Vector Aggregator 30 to create the aggregated vector 204. The dynamic meta embedding and triplet loss process are discussed in more detail below.

For each subnetwork 501, a Dynamic Meta Embeddings approach proposed by Kiela, Wang, and Cho in 2018 is adapted to combine a set $V_i$ of input vectors $V_1$, $V_2$, ..., $V_n$, into a d'-dimensional vector (meta embedding). Each input vector corresponds to the vector from a single type of document representation, and the dimension of $V_i$ is $d_i$. Each input vector $V_i$ is projected into a d'-dimensional vector via a linear transformation. Then a scalar weight for each projected vector is used to combine the projected vectors into a meta-embedding vector. The sum of the scalar weights is forced to be 1 using a softmax function. Both linear transformation parameters and scalar weights are learned via the training task, described below.

The parameters in the Siamese Neural Network 500 are learned via an Event Similarity Task, which is a well-known technique, for example, similar to that described by Saravanakumar, Ballesteros, Chandrasekaran, & McKeown in 2021. An advantage of this technique is that it is ideally suited to learning similarity between two inputs.

The objective is to minimise a triplet loss function (Reimers & Gurevych, 2019) so that the distance between the anchor and a matching (positive) input is minimised while the distance between the anchor and a non-matching (negative) input is maximised. In this way, the neural network learns the optimal weights for clustering documents relating to the same event together, while also separating clusters relating to different events. The equation below shows the triplet loss function that must be minimised:

$$\max \left( ||V'_{anchor} - V'_{positive}|| - ||V'_{anchor} - V'_{negative}|| + \varepsilon , 0 \right)$$

where $V'_{anchor}$, $V'_{positive}$, and $V'_{negative}$ are the meta embeddings for an anchor document, a positive document, and a negative document respectively. Margin $\varepsilon$ is a configurable parameter used to ensure that $V'_{positive}$ is at least $\varepsilon$ closer to $V'_{anchor}$ than $V'_{negative}$. This parameter is configured before training the network, but does not change during the training process.

In more detail, minimising each triplet loss involves minimising the maximum value of this equation. Indeed, the objective is to ensure the value of this equation is no greater than 0 by decreasing the $V'_{anchor} - V'_{positive}$ term and/or increasing the $V'_{anchor} - V'_{negative}$ term.

Two examples of this equation in use are shown below.

1.

$$V'_{anchor} - V'_{positive} = 0.5$$
$$V'_{anchor} - V'_{negative} = 0.2$$
$$\varepsilon = 0.3$$
$$\max \left( ||0.5|| - ||0.2|| + 0.3 , 0 \right) = \max(0.6 , 0) = 0.6$$

2.

$$V'_{anchor} - V'_{positive} = 0.1$$
$$V'_{anchor} - V'_{negative} = 0.5$$
$$\varepsilon = 0.3$$
$$\max \left( ||0.1|| - ||0.5|| + 0.3 , 0 \right) = \max(-0.1 , 0) = 0$$

After all the training triplets from the dataset are passed through the algorithm, the validation loss is calculated from the sum of all the losses of all the triplets in the validation set. This process is repeated (training triplets are passed through the algorithm multiple times) until the validation loss cannot be reduced any further. At this stage the algorithm is trained, and the parameters (vector weights 42) are learned. The parameters 42 can then be used by the Vector Aggregator 30 in the Cluster Processor 20 to efficiently create aggregated vectors for any new document.

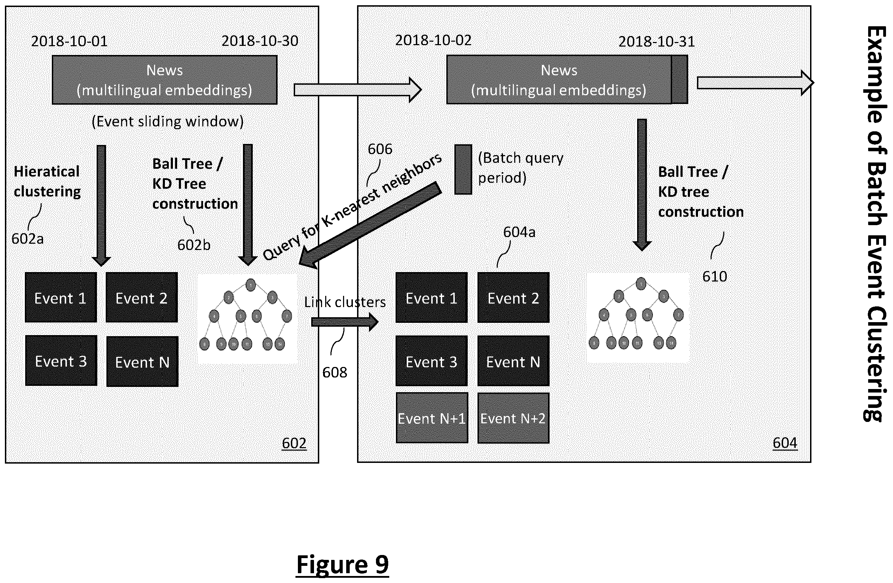

The second part of the Cluster Processor 20 is the Cluster Manager 34 which implements the clustering method 60. One non-limiting example of the batch clustering process 60 is shown by the schematic diagram in **Figure 9,** which shows the method applied to clustering of news articles. Initially, two parameters must be set. The first is the event sliding window, which is selected to be a time period outside of which documents are not expected to relate to the same event. In this example this is chosen to be 30 days, as news stories generated 30 days apart are unlikely to relate to the same event. The second parameter is the batch update period. This is how often the batch should be updated with new documents, and the clustering algorithm called to process the documents. In this example, this is selected to be one day. This time parameter could also be made very short (for example one minute) to support streaming though this would increase the processing required correspondingly.

It is to be appreciated that in another embodiment, the sliding window time period can be optimised using method such as grid search, (evaluated on a labelled multi-lingual data set), by jointly considering the two factors of accuracy of results and computation load. For example, a set of candidate values for sliding window size , e.g. 10 days, 11 days, 12 days... 40 days, are created and each is labelled (with cluster IDs) document dataset over a certain period.

For each candidate value, the Cluster Manager 34 runs the document clustering algorithm 36 as stated in this embodiment and uses an accuracy metric to evaluate how good the clustering performs, and a computation load metric to evaluate how much computation load is required. Different accuracy metrics may be used, but as an example, a multilingual news dataset with clusters labelled by human may be used as a validation dataset. Clustering metrics such as B-Cubed precision and recall can be used to evaluate how well the clustering performs compared to the clusters of the human-labelled dataset.

An optimal sliding window size (time period) is then determined by jointly considering the above two factors.

The example illustrated by **Figure 9** shows the clustering process split into two parts: initial clustering 602 that is carried out once, and online clustering 604 that runs every batch update period, and allows for a continuous clustering process.

### Initial Clustering 602

In the initial clustering process 602, all the news articles published in the event sliding window (i.e. within the chosen 30 day time period) are vectorised using the multilingual approach outlined above and illustrated in **Figure 6.** These news articles are then clustered into groups, where documents relating to the same event are grouped together, at Step 602a. Each created cluster is assigned an ID, the cluster centroids are calculated, and a search tree (for example a Ball Tree or KD Tree) is constructed at Step 602b using the centroids of these initial clusters.

### Online Clustering 604

When the next batch query period is entered (for example after one day in the example shown in **Figure 9**), the online clustering process 604 begins. This has three stages.

### Stage 1. Batch Clustering

For all documents published in the new batch update period, the same process as the initial clustering process 602 is carried out, where the documents are converted into vectors using the outlined multilingual technique, clustered at Step 604a into groups according to event, and then the cluster centroids are calculated for the clusters in the current batch.

### Stage 2. Merge or Create Clusters

The centroid of each batch cluster is then used to query at Step 606, the tree, that was built in the initial clustering process 602. The query finds the nearest neighbour in the current event sliding window within a particular radius r , i.e. determines if any stored clusters relate to the same event as the new batch clusters. If no nearest neighbour is returned for a batch cluster, this batch cluster is considered as a new event and a new unique cluster ID is created and assigned to it. Otherwise, the cluster ID of the nearest neighbour returned from the query is assigned to the batch cluster, and the clusters are linked at Step 608.

**Stage 3. Update Event Sliding Window**

Once all the batch clusters have been processed, the event sliding window slides ahead by a batch update period (by one day in this example). All the documents published in the previous batch update period are added to the event sliding window, and all older documents are moved out of the window. The centroids of all the remaining clusters are recalculated based on the remaining documents in the event sliding window, and a new search tree is built, at Step 610. Thus, the search tree is dynamically constructed and based on the data points in the event sliding window, and historical data points do not need to be included. If all the documents of an existing event cluster are moved out of the event sliding window, this event will end and cannot be linked with any future document.

Stages 1 to 3 are then repeated every batch update period, resulting in a continuous process where the clusters are continuously updated, and news articles can be linked to those containing information on the same event in an efficient process.

In some embodiments the Clustering System 10 is used as part of a database management system. The Clustering System 10 of the present invention provides a more efficient storage structure for input data files. Old data files can be removed from the datastore 14 when they are no longer relevant (outside of the sliding window) by means of the batch processor 22. Additionally, any duplicate documents can be identified (as described above) and flagged (or removed entirely from the clusters). As a result, the clusters are a more manageable size, which is important for applications where thousands of documents are received in each batch, for example receiving news event documents. Additionally, since the clusters are a more manageable size, when the Cluster System 10 is used for searching, search algorithms are able to find documents relating to a particular event more quickly. The database management system is therefore well suited to managing large databases of time-stamped materials.

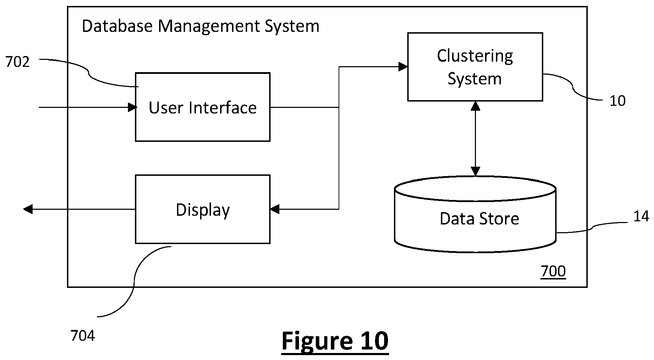

In some embodiments, the Clustering System 10 and the datastore 14 storing the clusters 44 are used to facilitate a more efficient search. In such embodiments the Cluster System 10 further comprises a means for receiving search query data. As illustrated in the schematic block diagram in Figure 10, in such embodiments the Cluster System 10 and the datastore 14 may be embedded in a database management system 700, which also comprises a user interface 702 and a display 704. The user interface 702 receives search query data, for example a set of key words relating to a particular event. The search query data is provided to the Cluster System 10, which processes the search query data and then uses a search algorithm to perform a search on the clusters 44 stored in the datastore 14. The search algorithm determines a cluster (specifically, a cluster centroid) that most closely matches the processed search query data, for example, within a certain threshold of the processed search query data (this process is described in greater detail below). The documents within the cluster that is determined to most closely match the processed search query data are then provided to the display 704 to be displayed to a user.

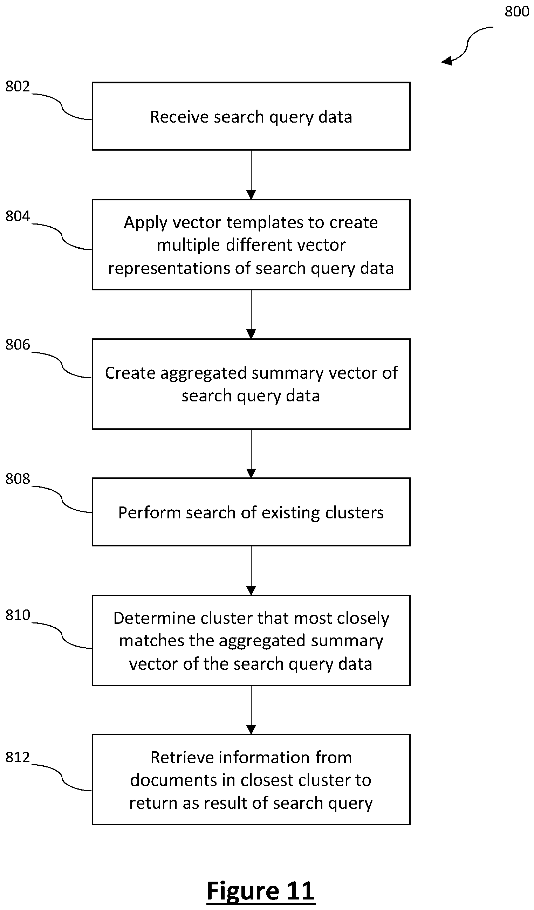

The method 800 implemented by the database management system 700 of Figure 10 to perform a search is illustrated in more detail by the flowchart in Figure 11. Firstly, the Cluster System 10 receives, at Step 802, search query data. The search query data may comprise any data supplied by a user to instigate a search. As an example, the search query data may comprise alpha-numeric search terms, and/or date information. As another example, the search query data may comprise a set of key words relating to an event. The skilled person will appreciate that these are merely examples and that search query data may take many different forms.

The vector templates 40 are then applied, at Step 804, to the search query data to create multiple different vector representations of the search query data, and an aggregated summary vector of the search query data is then created at Step 806. It should be noted that the aggregated summary vector for the search query data is created in the same manner as is carried out for the input documents, as described above. In other words, steps 102 and 104 described above are performed on the search query data.

As mentioned previously, the multiple vector representations can be created at the same time, in a parallel processing arrangement, which enables a faster search process. Once the aggregated summary vector of the search query data has been created at Step 806, a search of the existing clusters 44 is performed at Step 808 using the search tree 56 (for example a Ball Tree or KD Tree) of the existing clusters 44. The clustering system 10 then determines, at Step 810, the cluster that most closely matches the search query data.

Determining the cluster that most closely matches the search query data uses the search tree 56 and a proximity search. The cluster centroid (e.g. the centroid of the aggregated summary vectors for all documents within a cluster) that is closest to the aggregated summary vector of the search query data is found using, for example, a nearest neighbour search, or by determining which of the cluster centroids is within a particular similarity threshold of the aggregated summary vector of the search query data.

Once the closest cluster has been determined, information related to the documents (or records) therein may be returned in the results of the search. The information related to the documents in the closest cluster may be retrieved, at Step 812. The results may then be displayed to the user. The documents may be displayed in a list format, or in any other format. The documents may be organised by relevancy, e.g. according to the difference between the aggregated vectors of the search query data and the aggregated vectors of the respective documents in the closest cluster (the closer the aggregated vectors of the search query data are to a document, the more relevant it will be to the search query). That is, the individual document for which the aggregated summary vector is closest to the aggregated summary vector (indicating a close match) for the search query data may be presented at the top of a list.

In some embodiments, a matching cluster for the search query data may not be found, for example, if no cluster centroids are within a specified similarity threshold of the aggregated summary vector of the search query data. In such instances, the cluster processor 20 may determine the closest cluster to the search query data based on the cluster centroid that is the smallest distance from the aggregated summary vector of the search query data, and present the documents in the closest cluster to the user.

The cluster system 10 may remove duplicates from the search results based on the aggregated vectors of the documents. For example, if two documents have aggregated vectors with a similarity metric greater than a threshold similarity, then only one of said documents may be returned in the search results.

The cluster system may further be used to provide back-up documents. For example, if a document is unavailable (e.g. corrupted, moved, deleted or unavailable for any other reason), then the cluster system may recommend an alternative or back-up document based on the aggregated vectors of the documents. For example, if two documents have aggregated vectors with a similarity metric greater than a threshold similarity, then one of the documents may be returned as a back-up document if the other is unavailable.

This method results in a more computationally efficient search, compared with, for example, methods that use methods such pairwise similarity checks (as described in the Background section) that are time consuming. Because the aforementioned method is language-agnostic, the method can also be used for computationally efficient and quick document searching in multiple languages.

Although the examples above have been described with respect to documents, it will be appreciated that the methods herein, such as the methods 100 and 800 may equally be applied to other types of content. Examples of content include, but are not limited to, documents, books, webpages, blogs, news articles, technical guides, or any other format comprising alpha-numeric data.

Many modifications may be made to the specific embodiments described above without departing from the spirit and scope of the invention as set forth in the present disclosure.

Features of one embodiment may also be used in other embodiments, either as an addition to such embodiment or as a replacement thereof.

Further aspects of the present invention may reside in the below clause:

1. A Cluster System for automatically clustering together a plurality of data files based on semantics of textual content of each of the plurality of data files, the Cluster System comprising a Cluster Processor for processing the plurality of data files created externally and independently of the Cluster System, the Cluster Processor comprising:

An Event Data Ingester for receiving each of the plurality of data files;
A Vector Creator configured to apply each of a plurality of different stored vector templates to a data file received by the Event Data Ingester to determine a plurality of numerical vector representations of the textual content of the data file, each vector template defining a specific subset of characteristics of the textual content of the data file and each vector representation being specific to each vector template and indicating the degree to which the specific subset of characteristics of textual content of the vector template is present in the data file;
A Vector Aggregator configured to combine the plurality of numerical vector representations of the textual content of the data file into an aggregated summary vector representing the textual content of the data file, the Vector Aggregator being configured to use a set of vector weights to determine the contribution of each of the different vector representations to the aggregated summary vector; and
A Cluster Manager configured to use the aggregated summary vector to cluster together the data file with other data files each having their own aggregated summary vector.

## Claims

1. A Cluster System (10) for automatically clustering together a plurality of data files (200) based on semantics of textual content of each of the plurality of data files, the Cluster System (10) comprising a Cluster Processor (20) for processing the plurality of data files (200) created externally and independently of the Cluster System (10), the Cluster Processor (20) comprising:

An Event Data Ingester (26) for receiving each of the plurality of data files (200);
A Vector Creator (28) configured to apply each of a plurality of different stored vector templates (40) to a data file received by the Event Data Ingester (26) to determine a plurality of numerical vector representations (202a, 202b, 202c, 202d) of the textual content of the data file, each vector template (40) defining a specific subset of characteristics of the textual content of the data file (200) and each vector representation (202a, 202b, 202c, 202d) being specific to each vector template (40) and indicating the degree to which the specific subset of characteristics of textual content of the vector template (40) is present in the data file (200);

A Vector Aggregator (30) configured to combine the plurality of numerical vector representations (202a, 202b, 202c, 202d) of the textual content of the data file (200) into an aggregated summary vector (204) representing the textual content of the data file (200), the Vector Aggregator (30) being configured to use a set of vector weights (42) to determine the contribution of each of the different vector representations (202a, 202b, 202c, 202d) to the aggregated summary vector (204);

A Cluster Manager (34) configured to use the aggregated summary vector (204) to cluster together the data file (200) with other data files each having their own aggregated summary vector (204); and

wherein the Cluster System is further configured to:

receive search query data; and wherein

The Vector Creator (28) is configured to apply each of the plurality of different stored vector templates (40) to the search query data and determine a plurality of numerical vector representations of the search query data;

The Vector Aggregator (30) is configured to combine the plurality of numerical vector representations of the search query data into an aggregated summary vector representing the search query data; and

The Cluster Manager (34) is configured to:

determine that the aggregated summary vector of the search query data is within threshold limits of a cluster representation value of a first cluster of a set of existing clusters; and

provide one or more of the data files in the first cluster in response to the search query data.

2. The Cluster System of Claim 1, wherein the Cluster Manager (34) is configured to determine whether the aggregated summary vector (204) of the data file (200) matches a cluster representation value of any one of a set of existing clusters of the other data files and to create a new cluster representing the data file (200) if the aggregated summary vector (204) does not match the cluster representation value of any of the existing clusters and to add the new cluster to the set of existing clusters.

3. The Cluster System (10) of Claim 2, wherein the Cluster Manager (34) is configured to determine the cluster representation value of each existing cluster as a centroid value of the aggregated summary vectors making up a corresponding existing cluster.

4. The Cluster System (10) of any preceding claim, further comprising a Batch Processor (22) for processing the plurality of data files in a batch, the Batch Processor (22) being configured by a plurality of variable parameters to control the rate of ingestion of data files for processing and comprising a Parameter Setting Engine (50) configured to enable setting of a time period window as one of the plurality of variable parameters and a batch update period as another one of the plurality of variable parameters, and the Batch Processor (22) is configured to receive data files (200) made available during the time period window and to change the window in accordance with the batch update period.

5. The Cluster System (10) of Claim 4 as dependent on Claim 2 or 3, wherein the Cluster Processor (20) is configured to generate an aggregated summary vector (204) for each new data file (200) in the batch and to create a batch cluster of at least one of the new data files from these aggregated summary vectors (204), and the Batch Processor (22) further comprises a Batch Creation/Management Engine (52) which compares the cluster representation value of the batch cluster with the cluster representation values of the existing set of clusters and wherein the Batch Creation/Management Engine (52) is configured to add the batch cluster to the existing set of clusters as a new cluster if the cluster representation value of the batch cluster does not match the cluster representation value of any of the existing clusters.

6. The Cluster System (10) of Claim 5, wherein the Batch Creation/Management Engine (52) is configured to merge the batch cluster to a corresponding existing cluster, if the cluster representation value of the batch cluster matches the cluster representation value of the corresponding existing cluster.

7. The Cluster System (10) of Claim 5 or 6, wherein the Batch Creation/Management Engine (52) is configured to remove data files (200) from the existing clusters which no longer fall within the time period window.

8. The Cluster System (10) of any of Claims 4 to 7 as dependent on Claim 2 or 3, wherein the Batch Processor (22) further comprises a Tree Engine (54) for constructing a search tree for searching the existing clusters, the search tree being composed of cluster representation values of the existing set of clusters, the Tree Engine (54) being operable conduct a proximity search of the existing clusters for a value equivalent to the cluster representation value of a batch cluster.

9. The Cluster System (10) of any of Claims 1 to 8, wherein the Vector Creator (28) is configured to apply each of a plurality of different stored vector templates in parallel to the data file received by the Event Data Ingester (26).

10. The Cluster System (10) of any of Claims 1 to 9, wherein the Vector Creator (28) is configured to use a vector template (40) which defines a portion of a document structure in which the subset of characteristics of the textual content of the data file (200) are to be found.

11. The Cluster System (10) of any of Claims 1 to 10, wherein the Vector Creator (28) is configured to use a vector template (40) which defines an entity-specific subset or a topic-specific subset of characteristics of the textual content of the data file.

12. The Cluster System (10) of any of Claims 1 to 11, wherein the Vector Creator (28) uses a multilingual sentence encoder, trained on a plurality of different languages.

13. The Cluster System (10) of any of Claims 1 to 12, wherein the Vector Creator (28) is configured to detect text elements which match the specific subset of characteristics of the vector template (40), to link these text elements to vector embeddings in a knowledge base (406) and to determine an average value of all linked vector embeddings as the numerical vector representation (202a, 202b, 202c, 202d) of the data file.

14. The Cluster System (10) of any of Claims 1 to 13, wherein the Cluster Processor (20) further comprises an AI Processor (32) configured to generate the set of vector weights (42) used to combine different amounts of the vector representations (202a, 202b, 202c, 202d) into the aggregated summary vector (204), the AI Processor (32) being configured to be trained on a multitude of data sets.

15. The Cluster System (10) of Claim 14, wherein the AI Processor (32) uses a Siamese Neural Network with triplet loss, which has been trained on a multilingual dataset.

**Figure 1**

**Figure 2**

Batch Processor                                                    22

Parameter Setting Engine

50

Batch Creation/ Management Engine

52

Tree Engine

54

Data Store                                                         14

Search Tree

56

Operation Parameters

58

## Figure 3

**Figure 4    Batch Processing**

100

102 — Create multiple different vectors representations of doc

104 — Create aggregated vector of doc

106 — Any existing clusters?  — N

Y

110 — Match existing cluster?  — N

Y

112 — Merge

Create new cluster — 108

114 — Assign ID to cluster

**Figure 5**

**Vectors and Clustering**

## Different Vector Creation

202a → Title and Lead Paragraph Representation

104

200 Single Document

202b

Entity Representation

202c

Document Representation

202d

Other Representation(s)

Single aggregated vector

204

102

## Figure 6

## Examples of Representations

200 Text Document → Title/lead paragraphs encoded by multilingual sentence encoder → Title and Lead Paragraph Vector

302

202a

404

200 Text Document → Detect Entity Mentions → Link to Entries in KB → Average Value of All Entity Embeddings → Entity Vector

402

408

202b

Knowledge Store

406

## Figure 7

**Figure 8**

**Figure 9**

EP 4 418 142 A1

Database Management System

702

User Interface

Clustering
System

10

Display

Data Store

14

700

704

**Figure 10**

800

802 — Receive search query data

804 — Apply vector templates to create multiple different vector representations of search query data

806 — Create aggregated summary vector of search query data

808 — Perform search of existing clusters

810 — Determine cluster that most closely matches the aggregated summary vector of the search query data

812 — Retrieve information from documents in closest cluster to return as result of search query

**Figure 11**

Europäisches
Patentamt

European
Patent Office

Office européen
des brevets

# EUROPEAN SEARCH REPORT

Application Number

**EP 24 15 8243**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 281190 A (ADACHI FUMIYOSHI; WASHIO TAKASHI ET AL.) 3 October 2003 (2003-10-03) * paragraphs [0004], [0018], [0020], [0022], [0037], [0064], [0068] * ----- | 1-15 | INV. G06F16/35 |

TECHNICAL FIELDS
SEARCHED      (IPC)

G06F

The present search report has been drawn up for all claims

| Place of search | Date of completion of the search | Examiner |
|---|---|---|
| The Hague | 17 April 2024 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8243

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | Publication date | Patent family member(s) | Publication date |
|---|---|---|---|
| JP 2003281190 A | 03-10-2003 | NONE | |

For more details about this annex : see Official Journal of the European Patent Office, No. 12/82